# EUROPÄISCHE PATENTSCHRIFT

(11) **EP 0 750 820 B1**
(45) Veröffentlichungstag und Bekanntmachung des Hinweises auf die Patenterteilung: **02.09.1998**
(21) Anmeldenummer: 95913128.5
(22) Anmeldetag: 15.03.1995
(51) Int. Cl.: H04N 7/00, H04L 25/49, H04L 25/06

(54) **VERFAHREN ZUM VERARBEITEN EINES SERIELLEN, DIGITALEN DATENSIGNALS**
METHOD OF PROCESSING A SERIAL, DIGITAL DATA SIGNAL
PROCEDE DE TRAITEMENT D'UN SIGNAL DE DONNEES NUMERIQUE SERIEL

(30) Priorität: 16.03.1994 DE 4408963
(43) Veröffentlichungstag der Anmeldung: 02.01.1997
(73) Patentinhaber: KONLE, Tilmar, 81247 München (DE)
(72) Erfinder: EBNER, Andreas, D-82256 Fürstenfeldbruck (DE); SCHUSTER, Klaus, D-84032 Landshut (DE)
(86) Internationale Anmeldenummer: EP9500969
(87) Internationale Veröffentlichungsnummer: WO9525401

(56) Entgegenhaltungen:
- EP-A- 0 551 695
- DE-A- 4 112 712
- US-A- 4 242 755

## Beschreibung

Die Erfindung bezieht sich auf ein Verfahren gemäß dem Oberbegriff des Patentanspruchs 1. Ein derartiges Verfahren ist aus der DE-A-41 12 712 bekannt.

Bei der Signalisierung unterschiedlicher Bildformate und Zusatzinformationen (z.B. für unterschiedliche Signalvorfilterungen) für Breitbildempfänger ist es aus der DE-A-41 12 712 bekannt, serielle, digitale Signale in der ersten Hälfte der Zeile 23 des Fernsehsignals übertragen. Diese seriellen, digitalen Signale haben eine besondere Mischstruktur; sie bestehen pro Vollbild (= halbe Zeile 23) z.B. aus Signalelementen in unterschiedlicher Frequenzlage während der Startphase und aus 14 bi-phase-modulierten Signalelementen, von denen vier Signalelemente als 3-Bit-Aussage plus ein Fehlerschutzelement das Bildformat und die restlichen 10 Signalelemente weitere Zusatzinformationen signalisieren. Üblicherweise wird vor der Decodierung dieser Mischtruktur eine frequenzmäßige Trennung vorgesehen, um die Signalelemente gesondert decodieren zu können. Da es sich bei der Bildformatsignalisierung um eine sehr kritische Information handelt, müssen - um ein Mindestmaß an Signalisierungszuverlässigkeit auch bei ungünstigen Empfangsbedingungen, insbesondere an den Rändern der Rundfunkversorungsbereiche, zu erreichen - wenigstens die Aussagen dreier aufeinanderfolgender Vollbilder abgewartet und bewertet werden, bevor eine endgültige Aussage getroffen wird. Diese relativ träge Auswertung führt jedoch bei schnellen Kanalwechseln durch den Benutzer ("zapping") u.U. zu falschen Formateinstellungen des Breitbildempfängers.

EP-A-0 551 695 beschreibt den Empfang eines bi-phase-codierten Signals fester Datenrate durch Überabtastung, wobei die Abtastfrequenz nur während der Abtastung des Synchronwortes ein ganzzahliges Vielfaches der Datenrate ist, um deren Phasenlage festzustellen. Das Nutzdatensignal wird diskontinuierlich abgetastet: Eine Gruppe von Abtastimpulsen tastet jedes bit nur in der Umgebung seiner Mitte mehrfach ab, während in der Nähe der Ränder keine Abtastwerte genommen werden.

Die Aufgabe der Erfindung besteht demgegenüber darin, bei der Decodierung der Signalelemente eines seriellen, digitalen Datensignals eine zuverlässige Aussage schneller zu erzielen.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Verfahrens ergeben sich aus den Unteransprüchen.

Die Erfindung geht von der Überlegung aus, eine frequenzmäßige Trennung des empfangenen, digitalen Signals in höher- und tieferfrequente Signalelemente zu vermeiden und vielmehr eine einheitliche Abtastfrequenz für sämtliche Signalelemente vorzusehen, welche einem gemeinsamen Vielfachen der vorkommenden Frequenzlage der Signalelemente entspricht. Dadurch werden die Signalelemente mit einer gegenüber dem Abtasttheorem wesentlich erhöhten Abtastfrequenz abgetastet ("oversampling"), wodurch pro Vollbild und je Signalelement nicht nur ein einziger Abtastwert sondern eine Folge mehrerer Abtastwerte zur Verfügung steht. Diese Folge mehrerer Abtastwerte je Signalelement und je Vollbild erlaubt die Anwendung einer statistischen Mehrheitsprüfung, wodurch eine zuverlässige Aussage getroffen werden kann, ohne die Aussagen der nachfolgenden Vollbilder berücksichtigen zu müssen. Im Ergebnis läßt sich eine Vollbild bezogene Aussage über die Bildformatsignalisierung treffen, so daß auch bei schnellen Kanalwechseln durch den Benutzer stets eine richtige Formateinstellung des Breitbildempfängers gewährleistet ist.

Die Erfindung wird nachstehend anhand der Zeichnungen näher erläutert. Es zeigt:
- Fig. 1: eine Anordnung zur Durchführung des erfindungsgemäßen Verfahrens, und
- Fig. 2: zeigt Diagramme von Signalen, welche an den verschiedenen Punkten der Anordnung nach Fig. 1 auftreten.

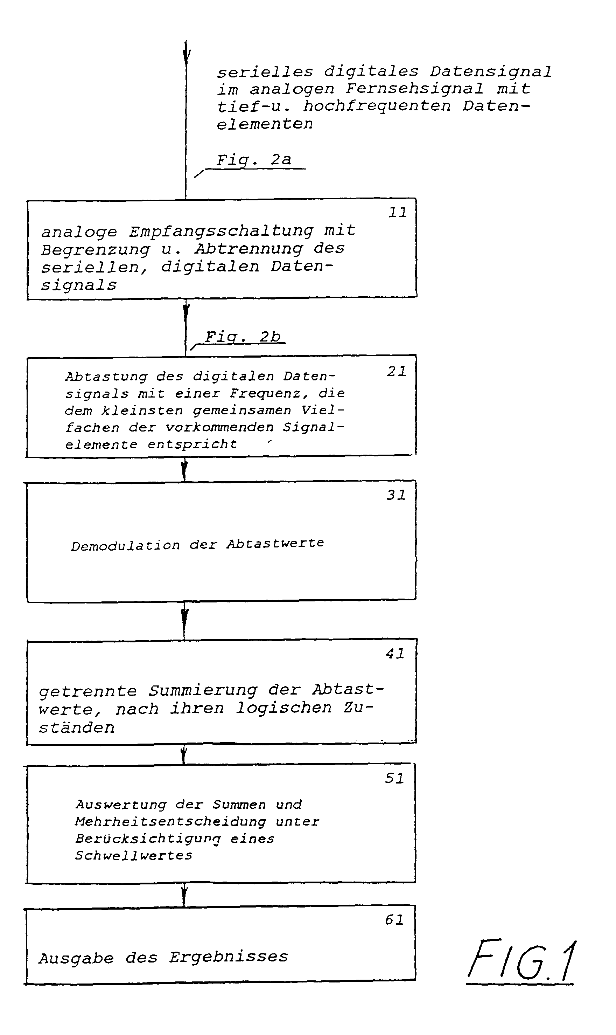

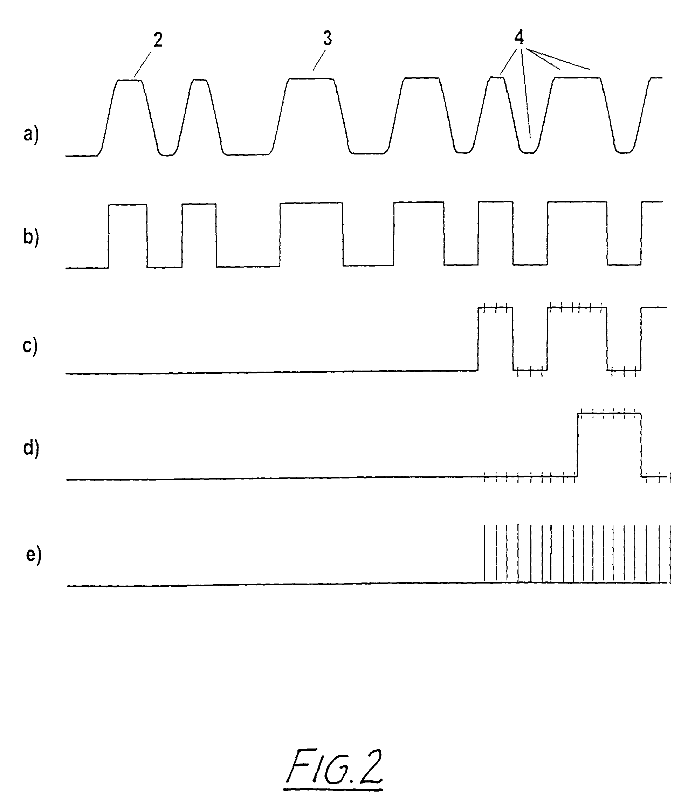

Der in Fig. 1 dargestellten Anordnung wird eine serielles, digitales Datensignal gemäß Fig. 2a zugeführt, das im Zeitmultiplex mit einem analogen Fernsehsignal in der ersten Hälfte der Fernsehzeile 23 übertragen wird. Bei dem Datensignal handelt es sich um das sogenannte "Wide-Screen-Signaling" Signal, welches in der Startphase mehrere, verschiedenfrequente Signalelemente 2, 3 sowie 14 gleichfrequente Signalelemente 4 aufweist. Bei der Darstellung in Fig. 2a handelt es sich nur um einen Ausschnitt des pro halbe Fernsehzeile 23 in jedem Vollbild übertragenen Datensignals.

Das zugeführte serielle, digitale Datensignal gemäß Fig. 2a wird in einer Stufe 11 vom Fernsehsignal abgetrennt und begrenzt, wie Fig. 2b zeigt. In einer nachfolgenden Stufe 21 wird das abgetrennte, und begrenzte Datensignal mit einer Taktfrequenz abgetastet, welche ein gemeinsames Vielfaches der Frequenzlagen der verschiedenfrequenten Signalelemente beträgt. Für die Signalelemente 4 des Signals gemäß Fig. 2a bedeutet diese relativ hochfrequente Abtastung, daß, wie anhand von Fig. 2c veranschaulicht ist, jedes Signalelement 4 mehrfach, im dargestellten Beispielsfalle sechsfach abgetastet wird.

Da jedes Signalelement 4 der Lange P (Fig. 2c) bi-phase-moduliert ist, werden bei der Demodulation in der Stufe 31 die Abtastwerte des invertierten Abschnitts jedes Signalelementes invertiert, wie anhand von Fig. 2d veranschaulicht ist. Nach erfolgter Demodulation werden in der Stufe 31 ferner die Abtastwerte, die den Signalelementen 4 zugeordnet sind, abgetrennt (Fig. 2e) und in der nachfolgenden Stufe 41 - für jedes Signalelement 4 gesondert - nach ihren logischen Zuständen summiert. In der nachfolgenden Stufe 51 erfolgt - wiederum getrennt für jedes Signalelement 4 - eine Auswertung der Summation, dahingehend, daß eine Mehrheitsentscheidung in einfacher oder gewichteter Form unter Berücksichtigung eines Schwellwertes erfolgt. Beispielsweise gilt ein Summationsergebnis als richtig, wenn 70% der summierten Abtastwerte eines Signalelementes 4 einem logischen Zustand entspricht. Liegen die Summationsergebnisse sämtlicher tieffrequenter Signalelemente 4 pro Vollbild über dem Schwellwert, dann gilt das Gesamtergebnis als sicher und wird an die Stufe 61 weitergegeben. Die Stufe 61 decodiert dann das aus den drei tieffrequenten Signalelementen bestehende 3-Bit-Wort und führt das Ergebnis den Bildformateinstellungsstufen des Breitbildempfängers zu.

## Patentansprüche

1. Verfahren zum Verarbeiten eines seriellen, digitalen Datensignals, welches in einem Fernsehsignal enthalten ist und von diesem abgetrennt wird, welches ferner in einem unveränderlichen Datenrahmen eingefügt ist und welches Signalelemente in verschiedenen Frequenzlagen aufweist, bei dem das Datensignal abgetastet wird und die entstehenden Abtastwerte mit dem Datenrahmen des abgetasteten Datensignals korreliert werden, **dadurch gekennzeichnet,** daß für den Fall, daß jedes Signalelement nur eine einzige Informationseinheit trägt, das Signalelement mit einer gegenüber seiner Frequenzlage erhöhten Abtastfrequenz abgetastet wird, wobei die Abtastfrequenz in Frequenz- und Phasenlage einem gemeinsamen Vielfachen aller Frequenzlagen der Signalelemente entspricht, und daß die Folge der bei der Abtastung des Signalelementes entstehenden Abtastwerte einer Mehrheitsprüfung in einfacher oder gewichteter Form unterzogen wird.

2. Verfahren nach Anspruch 1, **dadurch gekennzeichnet,** daß das Signalelement Bi-Phase codiert ist, daß vor der Mehrheitsprüfung in einfacher oder gewichteter Form die Abtastwerte des invertierten Abschnitts des Signalelementes invertiert werden und daß die nicht' invertierten und die invertierten Abtastwerte als gültig bewertet werden, wenn die Anzahl der Abtastwerte der einen Polarität über einem festgelegten Schwellwert liegt.

3. Verfahren nach Anspruch 1 oder 2, **dadurch gekennzeichnet,** daß als digitales Datensignal ein Signalisierungssignal für das aktuelle Bildformat eines Breitbildempfängers verwendet wird, und daß für den Fall der Wiedergabe des Datensignals von einem Heim-Videorecorder nur das geprüfte Signalelement für eine Steuerung des Bildformates des Breitbildempfängers verwendet wird.

## Claims

1. A method of processing a serial, digital data signal which is comprised in a television signal and which is separated from the latter, which is furthermore inserted into an unchangeable data frame and which is provided with signal elements in different frequency positions, and in which the data signal is scanned and the resulting scanned values are correlated with the data frame of the scanned data signal, **characterized in that**, in the event that each signal element only carries a single information unit, the signal element is scanned at a scanning frequency which is higher compared to its frequency position, with the scanning frequency in its frequency position and phase position corresponding to a common multiple of all frequency positions of the signal elements, and that the sequence of the scanned values generated during the scanning of the signal element is subjected to a majority check in a simple or weighted form.

2. A method according to claim 1, **characterized in that** the signal element is bi-phase-coded, that prior to the majority check in the simple or weighted form, the scanned values of the inverted segment of the signal element are inverted, and that the non-inverted and the inverted scanned values are considered to be valid if the number of the scanned values of the one polarity is above a defined threshold value.

3. A method according to claim 1 or 2, **characterized in that** as digital data signal a signaling signal for the actual picture format of a wide picture receiver is used and that, in the event that the data signal is reproduced by a home video recorder, only the checked signal element is used to control the picture format of the wide picture receiver.

## Revendications

1. Procédé pour le traitement d'un signal numérique en série qui est contenu dans un signal de télévision et qui est séparé de ce dernier, ce signal étant en plus, introduit dans une trame de données non modifiable et dont les éléments de signaux présentent des positions de fréquences différentes, le signal de données étant échantillonné et les valeurs échantillonnées résultantes sont corrélées avec la trame de données du signal de données échantillonnées, caractérisé en ce que, dans le cas où chaque élément de signal ne porte qu'une seule unité d'information, l'élément de signal est échantillonné avec une fréquence d'échantillonnage plus élevée que sa position de fréquence, de sorte que la fréquence d'échantillonnage correspond en position de fréquence et de phase, à un multiple commun de toutes les positions de fréquence des éléments de signaux, et en ce que, de la suite des valeurs d'échantillonnage résultant de l'échantillonnage de l'élément de signal, on déduit une vérification sur un grand nombre sous une forme simple ou pondérée.

2. Procédé selon la revendication 1, caractérisé en ce que l'élément de signal est codé en biphase et en ce que, avant la vérification sur un grand nombre sous forme simple ou pondérée, les valeurs d'échantillonnage de la partie inversée de l'élément de signal sont inversées et en ce que les valeurs d'échantillonnage non inversées et inversées sont considérées comme correctes quand le nombre des valeurs d'échantillonnage d'une polarité se trouve au-dessus d'un seuil déterminé.

3. Procédé selon la revendication 2, caractérisé en ce que l'on utilise comme signal de données numériques un signal d'indication pour le format de l'image actuelle d'un récepteur d'images larges, et en ce que, dans le cas de la reproduction du signal de données à partir d'un magnétoscope domestique on utilise seulement l'élément de signal vérifié pour une commande du format d'image du récepteur d'images larges.
